# EUROPEAN PATENT APPLICATION

(11) **EP 3 249 941 A1**
(43) Date of publication of application: **29.11.2017**
(21) Application number: 16171053.8
(22) Date of filing: 24.05.2016
(51) Int. Cl.: H04N 21/61, H04H 40/90

(54) **SYSTEM AND METHOD FOR AVOIDING DISEQC CONFLICTS**

(71) Applicant: Advanced Digital Broadcast S.A., 1292 Geneva (CH)
(72) Inventor: Mstowski, Bartosz, 65-119 Zielona Gora (PL)
(74) Representative: Blonski, Pawel

(57) **Abstract**

Method for avoiding DiSEqC conflicts in a receiver connected to a coaxial cable wherein the receiver utilizes the Unicable communication, the method being characterized in that it comprises the steps of: obtaining a list of an identified group of receivers, the group being organized according to an identified order; using a second communication channel (102) to communicate with at least one other receiver from said identified group; receiving a token over the second communication channel (102); transmitting a DiSEqC command over the Unicable bus only when said token has been received; after executing said DiSEqC command (405), transmitting said token, over the second communication channel (102), to the next receiver identified by said order.

## Description

### TECHNICAL FIELD

The present invention relates to a system and method for avoiding DiSEqC (Digital Satellite Equipment Control) conflicts. In particular, the present invention relates to a problem of requests collisions in a Unicable setup. A collision means for example two set-top boxes, trying to setup a user band (UB) channel, send Unicable commands to a Unicable switch over an antenna cable (one wire). Since they cannot detect other STB's transmission(s) (there is not any hardware support), sending both commands at the same time will cause an unwanted situation, in which UB channels for both STBs are not properly setup.

### BACKGROUND OF THE INVENTION

DiSEqC, is a communication protocol for use between a satellite receiver and a device such as a multi-dish switch or a small dish antenna rotor. The DiSEqC was developed by Eutelsat, which now acts as the standard's agency for the protocol.

A number of versions of DiSEqC exist: DiSEqC 1.0, which allows switching between up to 4 satellite sources; DiSEqC 1.1, which allows switching between up to 16 sources; and DiSEqC 1.2, which allows switching between up to 16 sources, and control of a single axis satellite motor.

DiSEqC protocol versions below 2 are simplex (one way) and there is not any answer from the slave device. Such a slave device may be a UNICABLE device also sometimes referred to as a "Single Cable Distribution" module. UNICABLE is a satellite television technology that enables delivery of broadcast over a single coaxial cable, and eliminates the numerous cables between the LNBs and tuners of a receiver. For example, a digital video recorder comprising four tuners will be supplied with television data via a single coaxial cable and each tuner will be able to access any selected portion of the satellite band (full spectrum access for multiple receivers).

A UNICABLE module is an example of an addressable module being addressable using DiSEqC commands. DiSEqC commands' sequences are transmitted in series as digital words. Standard sequence words are eight bits making one byte (increasing order), followed by one parity bit (odd). The DiSEqC data command sequence contains a frame byte, an address byte and a command byte, which can be followed by a data byte.

A satellite signal receiver, required to operate in a single cable distribution installation, can be essentially conventional. It should be able to tune to the user channel (within the normal IF tuning range) and modulate the LNB power voltage with the 22 kHz signal required for issuing DiSEqC commands. It will then require only a software modification in order to operate as a single cable distribution receiver (source: Wikipedia).

In the UNICABLE environment, the single directional communications of DiSEqC lead to a conflict situation when two or more devices use the communication bus at the same time. As a result, no device can perform it's action correctly because the sent message will be destroyed. The message will be destroyed due to the electrical arrangement of the bus, not to the message's content. The voltage levels, along with timing parameters are distorted so, the receiver is not able to decode message.

The standard EN 50494 describes several methods of determining conflict occurrence but all of them have theoretical value only.

The standard EN 50494 reads on page 21 that: "... In case of DiSEqC sequence failure, the transport stream being decoded remains unchanged; this situation can be detected after a delay Tw (Twait) by different methods:
1. The absence of corrupted packet after the DiSEqC control sequence; this detection is operated at the demodulator level. Tw_max=DiSEqC sequence duration+10 ms.
2. Continuity in the PCR counter; this detection is operated in the low-level software drivers of the demultiplexer. For details, see EN ISO/IEC 13818-1. Tw_max=DiSEqC sequence duration+200 ms (PCR is refreshed every 100 ms).
3. Continuity in the transport_stream_id value. Tw_max=DiSEqC sequence duration+1 000 ms (500 ms maximum duration between SI information carrying the transport_stream_id)..."

The disadvantage of the first of the above methods is that the method is not deterministic (i.e. given the same conditions, nothing else may happen). A corrupted packet may arrive at any time, due to any reason that may also be not predictable (a storm distorting the signal from satellite, a bird sitting on converter etc).

For the same reasons the second standard method is not suitable for coping with conflicts in a DiSEqC plus UNICABLE (or another DiSEqC receiver) environment or in general an environment with at least two devices sending DiSEqC commands.

The third suggested method turns out to be very slow and requires one second extra in order to check if a tuner is locked. It is unacceptable to a consumer to have a maximal recovery time of 7 attempts (as required by the standard)*(1 sec in order to check required PAT/PMT+0.5 sec for tuner locking+0.5 sec ... plus 1 sec of a random delay between the attempts (as required by the standard))=7*(2 ... 2.5 sec)=14 ... 17.5 seconds for maximal recovery time.

The method according to the third option also leads to dependencies between otherwise independent software modules. The software module which services all tuner actions would depend on PSI (Program-specific information) module which collects parameters from the stream. Obviously, a PSI module can collect data only when tuner is locked, otherwise it cannot. Now there would be a loop created in order to check if the DiSEqC command arrived properly to the UNICABLE switch tuner module would use it's client module. Of course it's possible to write software in such a way but both modules must be present in all system/software configurations to achieve full tuner functionality available.

Related prior art described for example in US 8855546 B2 "Satellite receiver, method for operating a satellite receiver, computer program and satellite system" or US 9226040 B2 "System and method for conflict recognition on DiSEqC protocol" focuses on conflict recognition rather than on conflict avoidance.

It would be thus desirable to provide an improved method and system for addressing potential conflict situations on DiSEqC protocol. Preferably such method and system shall not lead to recovery times as long as 17.5 seconds suggested by the DiSEqC standard.

### SUMMARY AND OBJECTS OF THE PRESENT INVENTION

An object of the present invention is Method for avoiding DiSEqC (Digital Satellite Equipment Control) conflicts in a receiver connected to a coaxial cable wherein the receiver utilizes the Unicable communication, the method comprising the steps of: obtaining a list of an identified group of receivers, the group being organized according to an identified order; using a second communication channel to communicate with at least one other receiver from said identified group; receiving a token over the second communication channel; transmitting a DiSEqC command over the Unicable bus only when said token has been received; after executing said DiSEqC command, transmitting said token, over the second communication channel, to the next receiver identified by said order.

Preferably, the receiver operates an application configured to request a channel change for a tuner device wherein said request has an associated priority.

Preferably, channel change requests for tuners used for live television have a higher priority than requests for tuners used for recording or other background data collecting tasks.

Preferably, a Unicable bus controller task is configured to maintain a queue of channel change requests, which are provided from the application wherein said requests are put into the queue on the position based on priority, so that top priority requests are processed first.

Preferably, the second communication channel is a wireless channel utilizing UDP/IP protocol for token transmission.

Preferably, one of said receivers is a ring monitor managing a process of initiating connections within said ring of the identified group of receivers.

Another object of the present invention is a computer program comprising program code means for performing all the steps of the computer-implemented method according to the present invention when said program is run on a computer.

Another object of the present invention is a computer readable medium storing computer-executable instructions performing all the steps of the computer-implemented method according to the present invention when executed on a computer.

### BRIEF DESCRIPTION OF THE DRAWINGS

These and other objects of the invention presented herein, are accomplished by providing a system and method for avoiding DiSEqC conflicts. Further details and features of the present invention, its nature and various advantages will become more apparent from the following detailed description of the preferred embodiments shown in a drawing, in which:
- Fig. 1: presents a diagram of the system according to the present invention;
- Fig. 2: presents a diagram of the method according to the present invention;
- Fig. 3A: depicts details of an STB according to the present invention;
- Fig. 3B: shows details of a data receiving block;
- Fig. 4: presents a block diagram of token processing;
- Fig. 5: presents a Unicable Bus Controller Task in more details;
- Fig. 6: presents a Unicable token manager operation in more details;

Fig. 7 presents a comparison of access to the Unicable bus with collisions (prior art) with access to the Unicable bus without collisions according to the present invention;
Fig. 8 presents a token lost procedure;
Fig. 9 presents a connection lost procedure; and
Fig. 10 presents a process of initiating connections within a ring

### NOTATION AND NOMENCLATURE

Some portions of the detailed description which follows are presented in terms of data processing procedures, steps or other symbolic representations of operations on data bits that can be performed on computer memory. Therefore, a computer executes such logical steps thus requiring physical manipulations of physical quantities.

Usually these quantities take the form of electrical or magnetic signals capable of being stored, transferred, combined, compared, and otherwise manipulated in a computer system. For reasons of common usage, these signals are referred to as bits, packets, messages, values, elements, symbols, characters, terms, numbers, or the like.

Additionally, all of these and similar terms are to be associated with the appropriate physical quantities and are merely convenient labels applied to these quantities. Terms such as "processing" or "creating" or "transferring" or "executing" or "determining" or "detecting" or "obtaining" or "selecting" or "calculating" or "generating" or the like, refer to the action and processes of a computer system that manipulates and transforms data represented as physical (electronic) quantities within the computer's registers and memories into other data similarly represented as physical quantities within the memories or registers or other such information storage.

A computer-readable (storage) medium, such as referred to herein, typically may be non-transitory and/or comprise a non-transitory device. In this context, a non-transitory storage medium may include a device that may be tangible, meaning that the device has a concrete physical form, although the device may change its physical state. Thus, for example, non-transitory refers to a device remaining tangible despite a change in state.

As utilized herein, the term "example" means serving as a non-limiting example, instance, or illustration. As utilized herein, the terms "for example" and "e.g." introduce a list of one or more non-limiting examples, instances, or illustrations.

### DESCRIPTION OF EMBODIMENTS

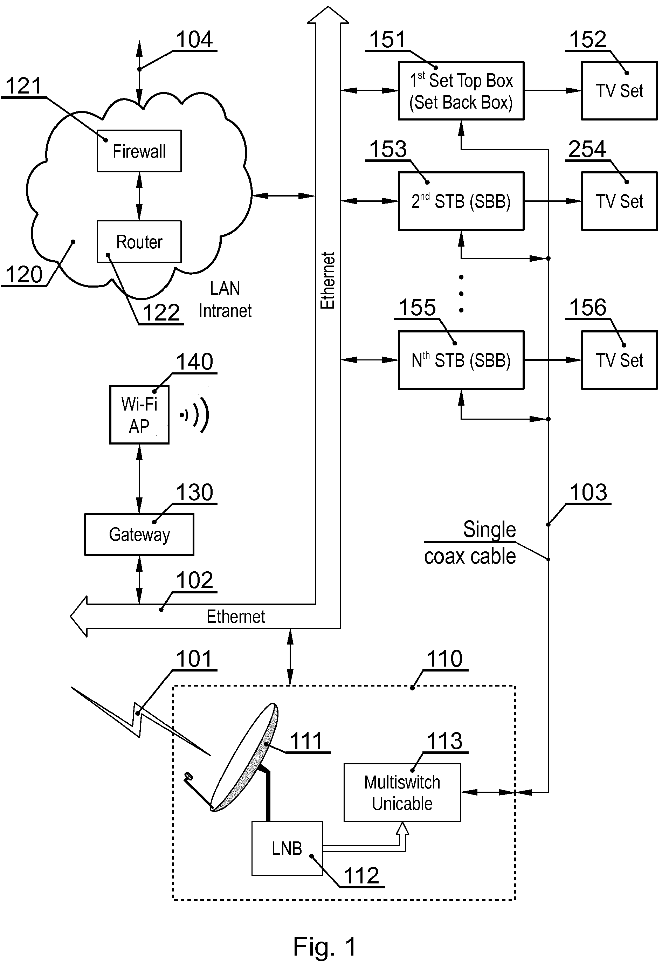

Fig. 1 presents a block diagram of the system according to the present invention. The system comprises at least two set-top boxes (STB) (151, 153, 155) configured to receive a signal from a satellite dish (111) via a coaxial cable (103). A multi-switch (113) and an LNB (112) are typically present while a set-top box communicates with the LNB using the DiSEqC protocol and uses the UNICABLE technology.

Additionally each set-top box (151, 153, 155) is connected to a second communication channel (for example Ethernet, Wi-Fi, Bluetooth or the like). Appropriate gateway (130), access point (140) or router (122) may be used in such second communication channel network as required by a given network setup.

Each set-top box (151, 153, 155) is configured to process the signal (101) received by the satellite dish (111) and output the processed signal on one of its outputs for example to a television set (152, 154, 156).

The present invention uses the second communication channel to exchange a token between the two or more STBs connected on one antenna cable. Only the STB, which posses the token is allowed to transmit Unicable commands over the Unicable bus.

When few STBs, with one or more DVB-S frontends, are connected to same Unicable switch, sharing the same antenna cable, there is a significant chance that collisions, on commands being sent, occur.

A collision occurs when two STBs attempt to send i.e. UB channel change command to Unicable switch.

The problem grows with number of tuners placed inside STB as demands of end user.

STB designs may have 2, 8 or even up to 16 tuners and the Unicable2 increases the number of UB channels to 32.

This means that the following example scenarios are possible:
16 STBs with 2 DVBS frontends each connected to one cable;
4 STBs with 8 DVBS frontends each connected to one cable;
2 STBs with 16 DVBS frontends each connected to one cable.

According to the aforementioned standards, duration of common channel change (70h) unidirectional command can be minimum <58ms> up to maximum <116 ms> depending on device.

Assuming 32 UBs being used this gives 1856ms up to 3712ms time required on the bus to setup all channels. It also means that STB with 16 tuners may interfere communication on Unicable bus for 928ms when setting up all UB channels used by its tuners.

This causes "starving" for satellite signal on other STBs connected on same cable and much worse user experience because of a need to resend Unicable commands and tuner signal acquisition retries.

Apart from time delays related with retransmissions required to properly tune to desired channel, there is also a risk that, because of collisions, a UB channel will not be properly setup.

In an example when changing channel from transponder with parameters: 11258MHz Horizontal Symbol Rate 27500 FEC 3/4 Modulation 8PSK to 11278MHz Vertical Symbol Rate 27500 FEC 3/4 Modulation 8PSK.

In case a command is corrupted because of collision tuner may not detect channel change is not actually done by switch since parameters of signal on a selected UB are the same.

Although the aforementioned standards point out how to detect collision occurrence and how properly generate pseudo-random delays between retransmissions, there are not mechanisms to prevent collisions and delays introduced in channel changing.

Another problem is that when STB contains 16 tuners, typically each is allocated for different function: i.e. 1 for Live TV, 3 for Zapping boost, another 4 for recording, 2 for live transcoding and for multiroom sharing with other STBs. In such case one can distinguish priorities of tuner usages and thus priorities of UB channel change request commands.

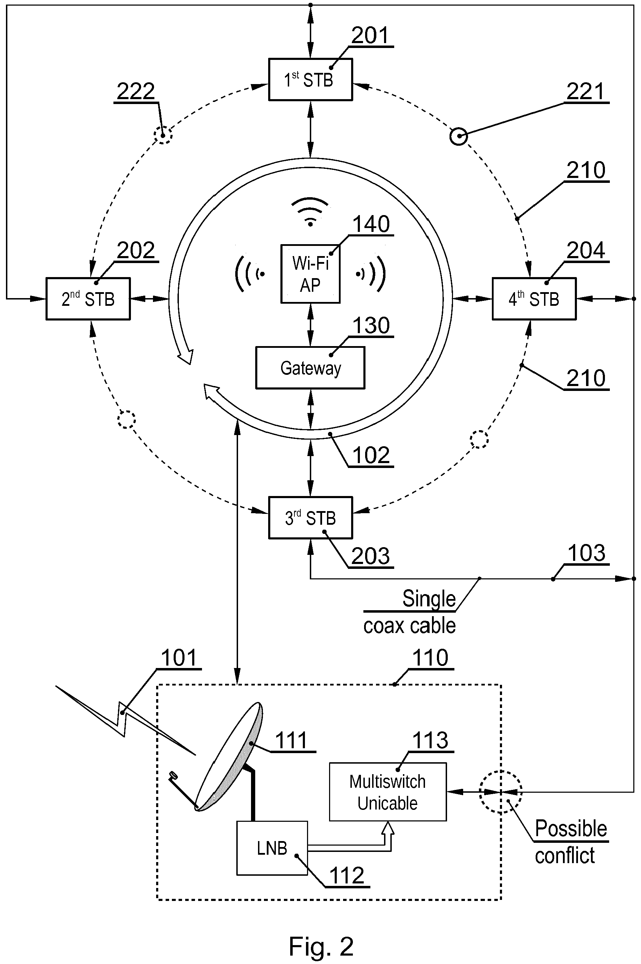

Fig. 2 presents a general diagram of the method according to the present invention. A token (221) is passed (222) among STBs (201, 202, 203, 204). When an STB has the token, it may issue DiSEqC commands. The STBs may pass the token within an identified group of receivers and according to an identified order using a communication channel (102). In this case a wireless second communication channel (102) is used by the STBs in order to transmit and receive said token. The wireless second communication channel may be operated using for example multicast commands.

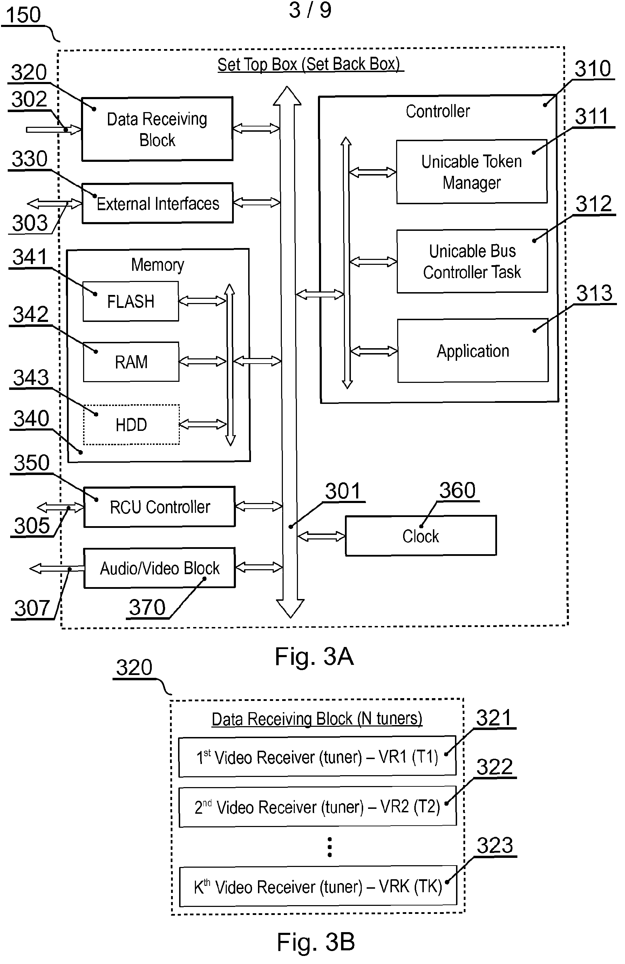

Fig. 3A depicts details of an STB (150) according to the present invention. The STB comprises typical blocks such as a data receiving block (320) that may be configured for a satellite signal (302). The data receiving block (320) may comprise N tuners (satellite) (321, 322, 323) as shown in Fig. 3B.

Additionally, some external interfaces may be present (330) such as USB or the like. Other interfaces include audio/video signals (307) generated by an audio/video block (370) that is configured to generate a final signal including any graphical layers.

The STB comprises different kinds of memories (340). A first memory may be a mass storage such as an HDD (343) while for example software and configuration data may be stored in a FLASH memory (341) and running applications may be stored in RAM (342).

A controller (310) operates an application (313) logic (be it software or hardware). The application is configured to request a channel change for tuner device, optionally based on utilization of tuner priority.

In some embodiments, channel change requests for tuners used for live TV presenting may have a higher priority than requests for tuners used for recording or other background data collecting tasks.

A Unicable bus controller task (312) (be it software or hardware) is responsible for maintaining a queue of channel change requests, which are provided from the application (313). Requests may be put into the queue on the position based on priority so that top priority requests are processed first.

As soon as a token is received and access to a Unicable bus is granted, the Unicable bus controller task (312) is responsible for fetching a first request from queue and sending it as a command via the Unicable bus using dedicated hardware in order to generate an electrical signal waveform according to applicable Unicable standards.

A Unicable token manager (311) is responsible for controlling a flow of the token packet around a network/ring of STBs connected in the network ring (system's setup will be explained in the reminder of the specification). It listens for an incoming token, from a previous STB in the ring, and acknowledges token's reception. Once the token reception is acknowledged, the Unicable token manager (311) sends a signal to the Unicable bus controller task (312) that access to the Unicable bus is granted to perform a single command transmission. Once the Unicable bus controller task (312) signals back that said command has been sent, the Unicable token manager (311) is responsible for passing token packet to the next STB in the ring.

In case a token packet has not been received in an expected <MAX_WAIT_TIME> or the Unicable token manager (311) has not received an acknowledgment from the next STB in the ring, which may mean the ring has been broken by powering off one of STB devices, the Unicable token manager (311) tries to re-establish connection.

An alternative solution of connection between STBs, which is similar to star network topology, is where only one STB is a server that dispatches a token to client STBs. Once a client STB performs access to the Unicable bus it sends the token packet back to server.

Yet alternative solution, without using a token packet, is to setup a connection between a common sever STB and client STBs so that client STBs send their channel change request commands in a form of TCP/UDP IP packets to the server STB, which has alone a control over the Unicable bus and does send all Unicable commands to a Unicable switch.

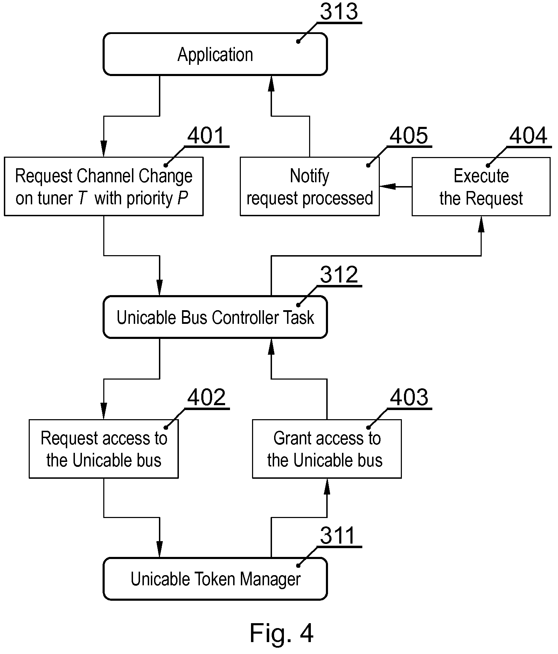

Fig. 4 presents a block diagram of token processing. At step (401) the Application module (313) requests a channel change on a selected tuner T with a priority P. The priority parameter is optional herein, but may be useful in complex setups with multiple tuners.

This request is passed to the Unicable bus controller task (312) of the STB that requests the channel change. Subsequently, at step (402), the Unicable bus controller task (312) requests access to the Unicable bus. The Unicable token manager (311) governs access to the bus based on its possession of the token. When the Unicable token manager (311) has received the token it grants access the Unicable bus at step (403) by notifying the Unicable bus controller task (312) of the STB that requests the channel change. Once notified, the Unicable bus controller task (312) sends (404) the required Unicable command and notifies (405) the Application (313) that the initial request has been processed.

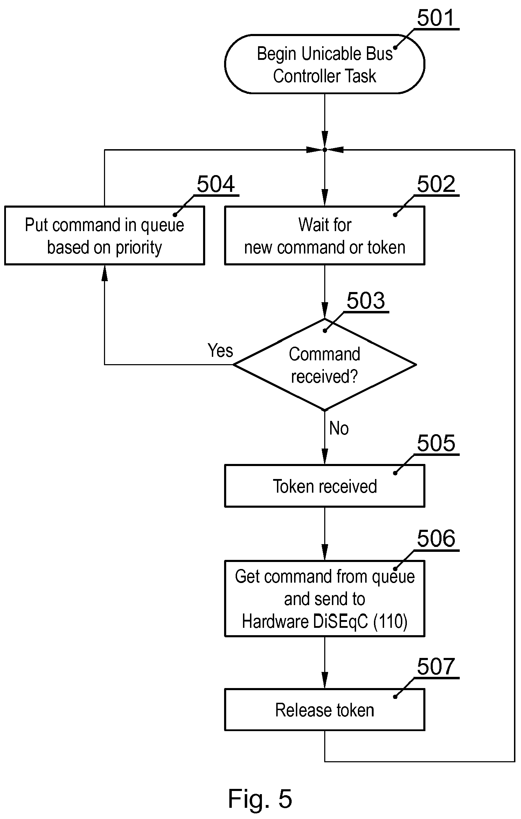

Fig. 5 presents the Unicable Bus Controller Task (501) in more details. At step (502) the task awaits a new command from the Application or a token from the Unicable token manager (311). When a command is received, at step (503), it is put (504) in a commands queue based on priority (it is to be noted that all commands may have equal priority and that this parameter is not implemented in some embodiments). After the command has been put in the queue, the process returns to step (502). Otherwise, when there is a command in the queue and a token is received at step (505), the process obtains a command from the queue and sends it to the Hardware DiSEqC (110). Subsequently, the token may be released (507).

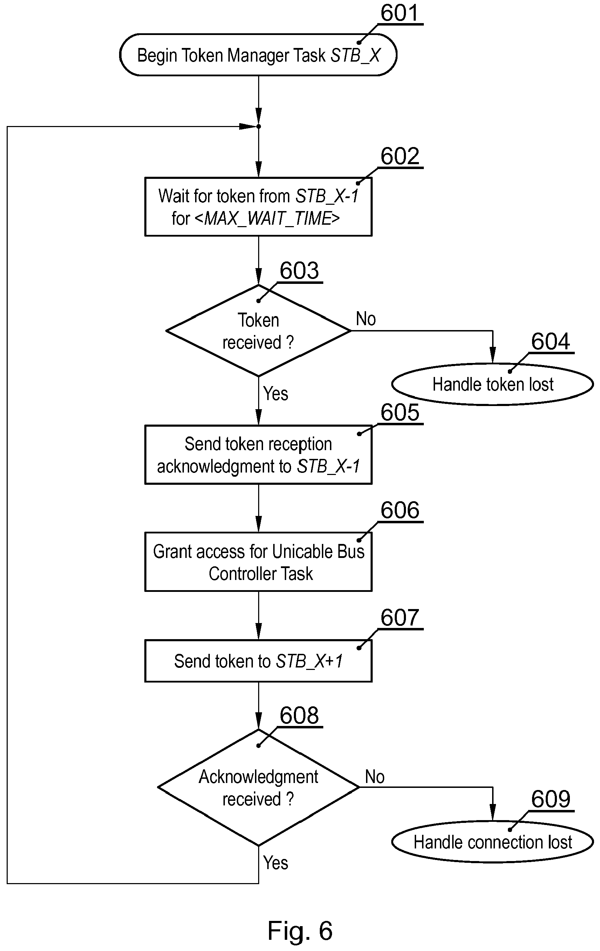

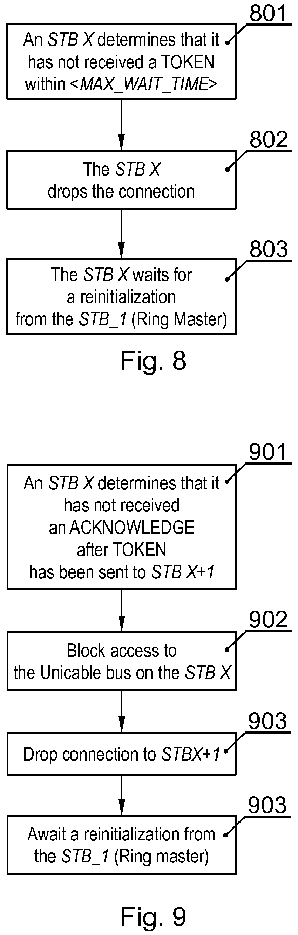

Fig. 6 presents the Unicable token manager (311) operation (601) in more details. At step (602) the task awaits for a token from an STB_X-1 for a predefined <MAX_WAIT_TIME>. In case the token is not received within the time (603), the manager handles a token-lost procedure. An example of such a procedure has been shown in Fig. 8.

Otherwise, when the token is received within the time (603), at step (605) the Unicable token manager (311) sends a token reception acknowledgment to the sender STB X-1.

Subsequently, at step (606), the Unicable token manager (311) grants access to the Unicable Bus Controller Task (312). When the Unicable Bus Controller Task (312) releases the token, at step (607) the token is sent to the STB X+1. The STB X+1 needs to report back the tokens safe reception by transmitting an acknowledgment message to the STB releasing the token (608). In case such acknowledgment is received, the Unicable token manager (311) returns its operation to step (602). Otherwise, the Unicable token manager (311) handles a connection lost state. An example of such a procedure has been shown in Fig. 9.

The system's setup needs to establish a ring of STBs and preferably identify a sequence loop of STBs so that a given STB always receives a token from a defined, preceding STB X-1 and passes the previously received token to a defined successive STB X+1.

The setup may be executed such that a user enters a list of STBs by providing their IP addresses. The STB, with the lowest IP address, may send a CONNECTION_REQEST packet to the STB with the next lowest IP and listen to CONNECTION_REQEST of the higher IP. The connections may be accepted by a CONNECTION_ACK message. Alternatively, each STB may be provided with a reference to (eg. an IP/MAC address) of the preceding and the next STB in the ring (not a complete list of STBs in the ring).

The preference is that each receiver in the ring obtains a list of an identified group of receivers (members of the ring), the group being organized according to an identified order (for example a list of increasing IP addresses).

Preferably, several test cycles of TOKEN packet transmission are performed in order to measure a latency of the network (maximum time from sending to receiving back a token on each STB). Before the test token is passed further, an STB may send a test channel change command to simulate max delay (a time to send a command on the Unicable bus plus network communication latency). Based on it <MAX_WAIT_TIME> can be derived.

The preferred communication protocol is UDP/IP with a simple ACK acknowledge of the received TOKEN UDP and CONNECTION packet in order to achieve a minimum latency.

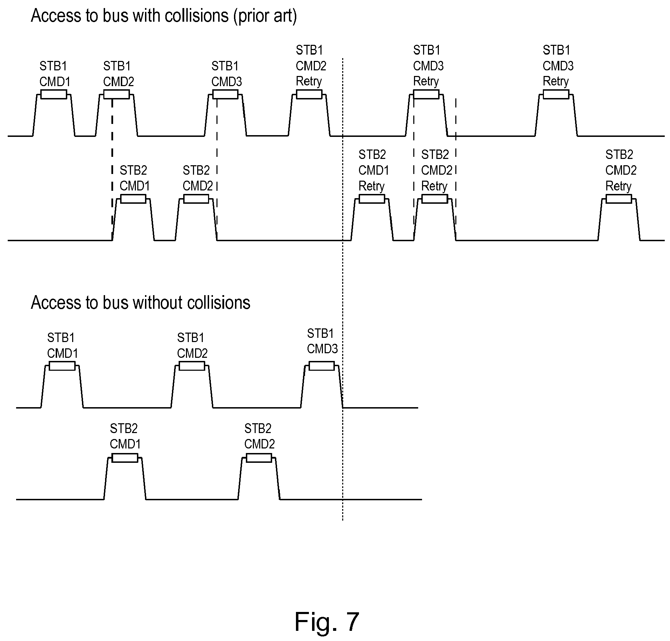

Fig. 7 presents a comparison of access to the Unicable bus with collisions (prior art) with access to the Unicable bus without collisions according to the present invention. As can be seen, all commands are executed much faster when the present invention is applied. The difference will typically increase as the number of tuners increases.

Fig. 8 presents a token lost procedure. At step (801) an STB X determines that it has not received a TOKEN within <MAX_WAIT_TIME>. Subsequently, at step (802) the STB X drops the connection and waits (803) for a reinitialization from the STB_1 (Ring Master).

In case there is a problem with the ring master, the following procedure may be executed. When STB_2 has not received the TOKEN after <MAX_WAIT_TIME> it pings STB_1 (Ring master). If no reply, the STB_2 becomes the Ring_Master and initiates a connection.

Fig. 9 presents a connection lost procedure. At step (901) an STB X determines that it has not received an ACKNOWLEDGE after TOKEN has been sent to STB X+1. This means STBX+1 is powered off/disconnected. Subsequently, at step (902) there is blocked access to the Unicable bus on STB X. Next, at step (903) there is dropped connection to STBX+1 and the system awaits (904) for reinitialization from the STB_1 (Ring master). The remaining STBs of the ring, handle the lost token after timeout.

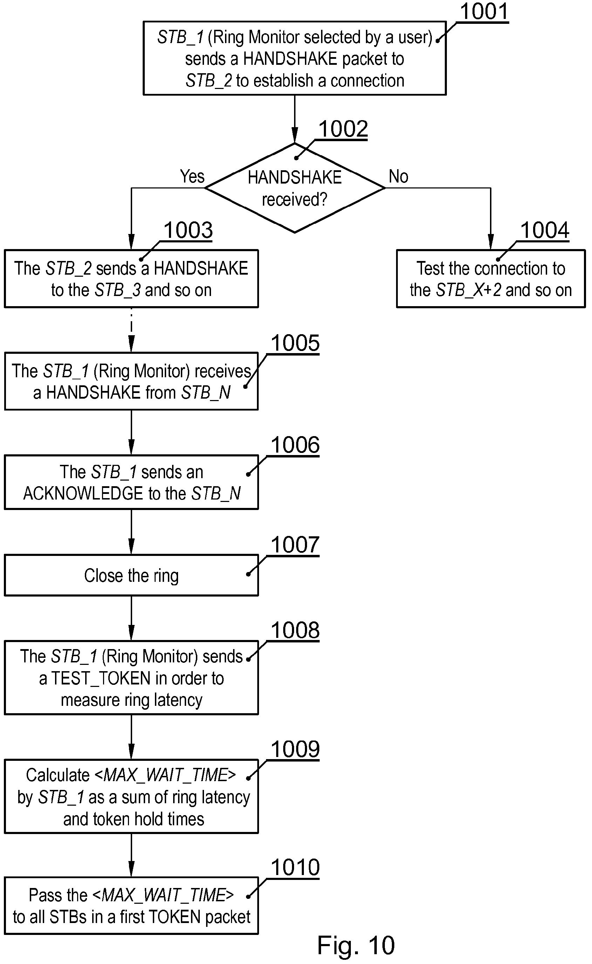

Fig. 10 presents a process of initiating connections within a ring. At step (1001) the STB_1 (Ring Monitor selected by a user) sends a HANDSHAKE packet to STB_2 in order to establish a connection. If replied with HANDSHAKE (1002), the STB_2 sends (1003) a HANDSHAKE to the STB_3 and so on.

In case the STB_X does not receive handshake_ACK (1004) from the STB_X+1 (STB_X+1 is probably down or disconnected) then it tests the connection to the STB_X+2 and so on.

If the STB_1 (Ring Monitor) receives a HANDSHAKE from STB_N (1005) it sends an ACK (1006) to the STB_N and the ring is closed (1007).

Subsequently, at step (1008), the STB_1 (Ring Monitor) sends a TEST_TOKEN in order to measure ring latency plus each receiver in the ring sends a test Channel Change command on the Unicable bus in order to determine token hold time. Based on that, at step (1009) the <MAX_WAIT_TIME> can be calculated by STB_1 as a sum of ring latency and token hold times. Lastly, at step (1010) the <MAX_WAIT_TIME> may be passed to all STBs in a first TOKEN packet.

The present invention prevents collisions on a Unicable data bus and results in quickest possible execution of DiSEqC commands in a multituner environment. Therefore, the invention provides a useful, concrete and tangible result.

A machine and its corresponding operation have been presented above, thus the machine or transformation test is fulfilled and that the idea is not abstract.

At least parts of the methods according to the invention may be computer implemented. Accordingly, the present invention may take the form of an entirely hardware embodiment, an entirely software embodiment (including firmware, resident software, micro-code, etc.) or an embodiment combining software and hardware aspects that may all generally be referred to herein as a "circuit", "module" or "system".

Furthermore, the present invention may take the form of a computer program product embodied in any tangible medium of expression having computer usable program code embodied in the medium.

It can be easily recognized, by one skilled in the art, that the aforementioned method for avoiding DiSEqC conflicts may be performed and/or controlled by one or more computer programs. Such computer programs are typically executed by utilizing the computing resources in a computing device. Applications are stored on a non-transitory medium. An example of a non-transitory medium is a non-volatile memory, for example a flash memory while an example of a volatile memory is RAM. The computer instructions are executed by a processor. These memories are exemplary recording media for storing computer programs comprising computer-executable instructions performing all the steps of the computer-implemented method according the technical concept presented herein.

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the technical concept. The presented preferred embodiments are exemplary only, and are not exhaustive of the scope of the technical concept presented herein.

Accordingly, the scope of protection is not limited to the preferred embodiments described in the specification, but is only limited by the claims that follow.

## Claims

1. Method for avoiding DiSEqC (Digital Satellite Equipment Control) conflicts in a receiver connected to a coaxial cable wherein the receiver utilizes the Unicable communication, the method being **characterized in that** it comprises the steps of:
• obtaining a list of an identified group of receivers, the group being organized according to an identified order;
• using a second communication channel (102) to communicate with at least one other receiver from said identified group;
• receiving a token over the second communication channel (102);
• transmitting a DiSEqC command over the Unicable bus only when said token has been received;
• after executing said DiSEqC command (405), transmitting said token, over the second communication channel (102), to the next receiver identified by said order.

2. The method according to claim 1, **characterized in that** the receiver operates an application (313) configured to request a channel change for a tuner device wherein said request has an associated priority.

3. The method according to claim 2, **characterized in that** channel change requests for tuners used for live television have a higher priority than requests for tuners used for recording or other background data collecting tasks.

4. The method according to claim 2, **characterized in that** a Unicable bus controller task (312) is configured to maintain a queue of channel change requests, which are provided from the application (313) wherein said requests are put into the queue on the position based on priority, so that top priority requests are processed first.

5. The method according to claim 1, **characterized in that** the second communication channel (102) is a wireless channel utilizing UDP/IP protocol for token transmission.

6. The method according to claim 1, **characterized in that** one of said receivers is a ring monitor managing a process of initiating connections within said ring of the identified group of receivers.

7. A computer program comprising program code means for performing all the steps of the computer-implemented method according to claim 1 when said program is run on a computer.

8. A computer readable medium storing computer-executable instructions performing all the steps of the computer-implemented method according to claim 1 when executed on a computer.

9. System for avoiding DiSEqC (Digital Satellite Equipment Control) conflicts in a receiver connected to a coaxial cable wherein the receiver utilizes the Unicable communication, the system being **characterized in that** it comprises:
• a connection to a signal from a satellite dish (111) via a coaxial cable (103) wherein DiSEqC protocol is used in a Unicable communication;
• a second communication channel connection;
• a data receiving block (320) comprising at least one tuner;
• a controller (310) configured to execute all step of the method according to claim 1.
